# EUROPEAN PATENT APPLICATION

(11) **EP 4 650 231 A1**
(43) Date of publication of application: **19.11.2025**
(21) Application number: 25175018.8
(22) Date of filing: 08.05.2025
(51) Int. Cl.: B60T 1/06

(54) **ROTARY DRIVE SYSTEM**

(30) Priority: 13.05.2024 JP 2024078065
(71) Applicant: Nachi-Fujikoshi Corp., Tokyo 1050021 (JP)
(72) Inventor: TAKEDA, Yuta, Toyama-shi,, 9308511 (JP); YOKOTA, Takaya, Toyama-shi,, 9308511 (JP)
(74) Representative: HKW Intellectual Property PartG mbB

(57) **Abstract**

To provide a rotary drive system that is capable of supplying both the hydraulic fluid for releasing the brake and lubricating oil for the speed reducer from a single hydraulic source and that is also capable of cooling of the electric motor while maintaining the cleanliness of the lubricating oil. The rotary drive system 100 includes: a brake piston 140 that comes into frictional contact with brake discs 138a, 138b fixed to a shaft 126 of an electric motor 102; a brake spring 142 that biases the brake piston toward the brake discs; a brake release port 110 that supplies hydraulic fluid to release the brake from a hydraulic source 112 to a brake chamber 152; a communication hoe 156 that is in communication with the brake chamber side of the brake piston extending to the electric motor side; a discharge port 122 provided in a housing 120 of the electric motor for discharging the hydraulic fluid that passes from the brake chamber to the interior of the electric motor via the communication hole; and a supply passage 118 formed between the brake piston and the brake disc when the brake is released for supplying the hydraulic fluid to a speed reducer 104.

## Description

### ROTARY DRIVE SYSTEM

### TECHNICAL FIELD

The present invention relates to a rotary drive system that includes a motor with a speed reducer.

### BACKGROUND ART

As one example, in construction machines such as hydraulic excavators, a rotary drive system equipped with an electric motor and a speed reducer is used (see, for example, Patent Document 1). Patent Document 1 discloses a hydraulic excavator equipped with a rotary drive system that rotates an upper swing body relative to a lower traveling body.

This rotary drive system is equipped with an electric motor, a speed reducer that decelerates the rotation of the electric motor, a hydraulic pump, and a lubricating oil pump. The hydraulic pump supplies pressure oil (hydraulic fluid) to release the brake during operation of the electric motor. The lubricating oil pump supplies lubricating oil to the interior of the electric motor to maintain cooling and lubrication.

### CITATION LIST

### PATENT DOCUMENTS

Patent Document 1: JP 2019-154101 A

### DISCLOSURE OF THE INVENTION

### TECHNICAL PROBLEM

However, the rotary drive system disclosed in Patent Document 1 includes two hydraulic sources: a lubricating oil pump that supplies lubricating oil to the speed reducer, and a hydraulic pump that supplies pressure oil for releasing the brake. In other words, two independent hydraulic circuits are required.

In addition, in the rotary drive system disclosed in Patent Document 1, lubricating oil stored in a reservoir portion within the speed reducer is also utilized to cool the electric motor. Since this lubricating oil continuously circulates within the system, the lubricating oil must be periodically replaced to maintain cleanliness. However, in a relatively small hydraulic excavator, such as those referred to as a mini-excavator, the rotary drive system is disposed beneath the operator's seat installed in a cab of the upper swing body. Accordingly, in the case of mini-excavator, replacing the lubricating oil of the rotary drive system requires removal of a floor frame inside the cab, which results in increased labor.

### SOLUTION TO PROBLEM

In view of these problems, the present invention is directed to providing a rotary drive system that is capable of supplying both hydraulic fluid for releasing a brake and lubricating oil for the speed reducer from a single hydraulic source and is also capable of cooling the electric motor while maintaining cleanliness of the lubricating oil.

To solve the above problems, a representative configuration of the rotary drive system according to the present invention includes: an electric motor; a speed reducer for reducing a rotational speed of the electric motor; and a brake mechanism, which is disposed between the electric motor and the speed reducer, for stopping rotation of the speed reducer, wherein the brake mechanism comprises: a brake casing; a brake disc fixed to a shaft of the electric motor; a brake piston that comes into frictional contact with the brake disc; a brake spring that biases the brake piston toward the brake disc; a brake chamber defined by the brake casing and the brake piston; a brake release port provided in the brake casing for supplying hydraulic fluid, which moves the brake piston toward an electric motor side against a biasing force of the brake spring to separate the brake piston from the brake disc, from an external hydraulic source to the brake chamber; a communication hole formed in the brake piston, communicating between the brake chamber side and the electric motor side; a discharge port provided in a housing of the electric motor for discharging the hydraulic fluid that passes from the brake chamber to an interior of the electric motor via the communication hole of the brake piston; and a supply passage formed between the brake piston and the brake disc when the brake piston is moved toward the electric motor side for supplying the hydraulic fluid, which is supplied to the brake chamber, to the speed reducer.

It is preferable that the slit is formed on the end surface of the brake piston on the electric motor side and that the slit extends from the communication hole to the edge of the end surface on the electric motor side.

Preferably, the electric motor includes a stator fixed to a housing and a rotor that rotates together with a shaft when an electric current is applied and that hydraulic fluid flows through a gap between the rotor and stator, passes through the interior of the electric motor, and is discharged from a discharge port.

### ADVANTAGEOUS EFFECTS OF THE INVENTION

According to the present invention, it is possible to provide a rotary drive system that supplies both hydraulic fluid for releasing the brake and lubricating oil for the speed reducer from a single hydraulic source, while also cooling the electric motor and maintaining cleanliness of the lubricating oil.

### BRIEF DESCRIPRTION OF THE DRAWINGS

FIG. 1 is an overall configuration diagram of the rotary drive system according to an embodiment of the present invention.
FIG. 2 is a diagram showing details of the rotary drive system.
FIG. 3 is an enlarged view of a main part of the rotary drive system shown in FIG. 2.
FIG. 4 is a diagram showing the brake piston of the rotary drive system shown in FIG. 3.
FIG. 5 is a diagram showing the flow of hydraulic fluid supplied to the rotary drive system in FIG. 2.

### DETAILED DESCRIPTION OF THE INVENTION

Hereinafter, a preferred embodiment of the present invention will be described in detail with reference to the accompanying drawings. The dimensions, materials, and other specific values shown in the embodiment are merely illustrative to facilitate understanding of the invention and do not limit the scope of the invention unless otherwise specified. Note that in the specification and drawings, elements having substantially the same functions and configurations are denoted by the same reference numerals to omit redundant explanation, and elements not directly related to the present invention are omitted from the drawings.

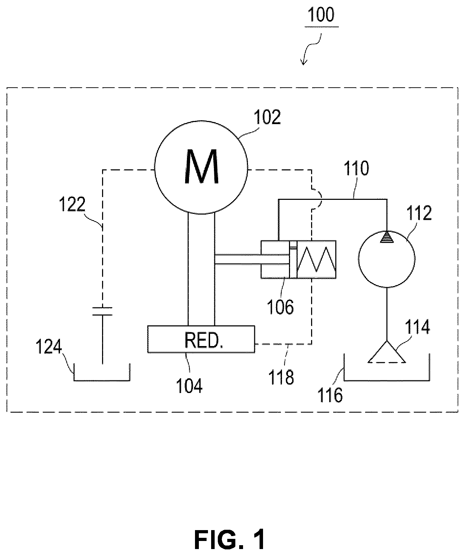

FIG. 1 is an overall configuration diagram of a rotary drive system 100 according to an embodiment of the present invention. The rotary drive system 100 is a system used in construction machinery such as a hydraulic excavator. The rotary drive system 100 includes an electric motor 102, a speed reducer 104 (indicated as "RED" in the figure, which is an abbreviation of "reduction") that reduces the rotation of the electric motor 102, and a brake mechanism 106. The electric motor 102 may be, for example, a rotary actuator such as a hydraulic motor or a water-pressure motor, and the driving force thereof may be provided by the hydraulic pressure or another conventional power source.

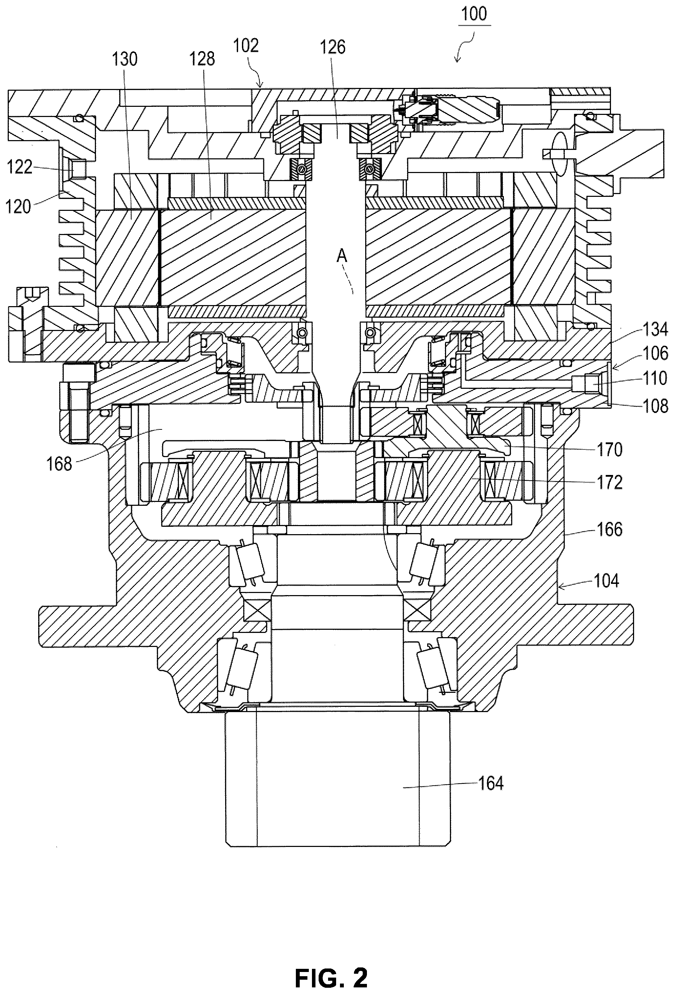

The brake mechanism 106 prevents unintended rotation of the electric motor 102 by stopping rotation of the speed reducer 104 when operation of the electric motor 102 is halted. The brake mechanism 106 also includes a brake casing 108 (see FIG. 2). The brake casing 108 is disposed between the electric motor 102 and the speed reducer 104 and is positioned on an outer side of a shaft 126. A brake release port 110 is provided at the outermost part of the brake casing 108. The brake release port 110 is connected to an external hydraulic source 112. The brake casing 108 further includes a brake release hydraulic passage 154 that extends from the brake release port 110 toward the shaft 126 located at the central side. This brake release hydraulic passage 154 allows hydraulic fluid to flow into a brake chamber 152, which will be described later.

The hydraulic source 112 draws hydraulic fluid from a hydraulic fluid tank 116 through a strainer 114 and supplies the hydraulic fluid to the brake release port 110. The brake release port 110 supplies the hydraulic fluid, which is used to release the brake of the brake mechanism 106 during operation of the electric motor 102, from the hydraulic source 112 to the brake mechanism 106.

Then, the hydraulic fluid supplied from the external hydraulic source 112 to the brake mechanism 106 is further supplied into the electric motor 102 through the brake mechanism 106 to cool the electric motor 102. Furthermore, the hydraulic fluid is not only used for cooling but also supplied, as lubricating oil, to the speed reducer 104 via a supply passage 118. Details of this will be described later. In addition, the hydraulic fluid supplied to the electric motor 102 is discharged to a drain pan 124 through a discharge port 122 provided in a housing 120 of the electric motor 102 (see FIG. 2).

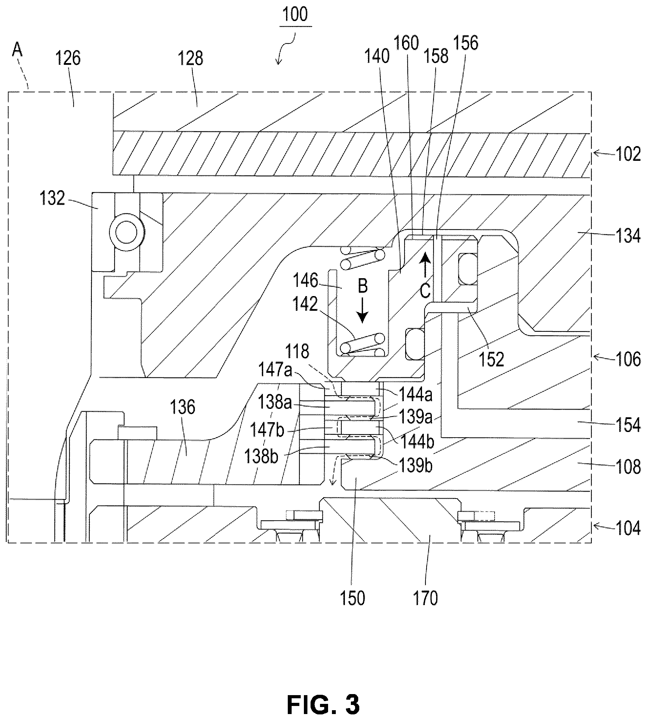

FIG. 2 is a diagram showing details of the rotary drive system 100 in FIG. 1. FIG. 3 is an enlarged view of a main portion of the rotary drive system 100 in FIG. 2. FIG. 3 is an enlarged view of the area enclosed by the dashed line A in FIG. 2.

As shown in FIG. 2, the rotary drive system 100 is structured such that the electric motor 102, the speed reducer 104, and the brake mechanism 106 are integrated as a single unit. Also, the brake mechanism 106 is disposed between the electric motor 102 and the speed reducer 104.

The electric motor 102 includes a shaft 126, a rotor 128, and a stator 130. The shaft 126 is rotatably supported by a bearing 132 (see FIG. 3) and extends through a flange 134 of the electric motor 102. Also, the flange 134 of the electric motor 102 is disposed between the brake mechanism 106 and the housing 120 of the electric motor. Furthermore, a through hole is formed on a central side of the flange 134. The shaft 126 passes through the through hole. The flange 134 is interposed between the brake casing 108 (described later; part of the brake mechanism 106) and the housing 120 (of the electric motor 102) and extends from an outer side of the rotary drive system 100 to a position facing the shaft 126.

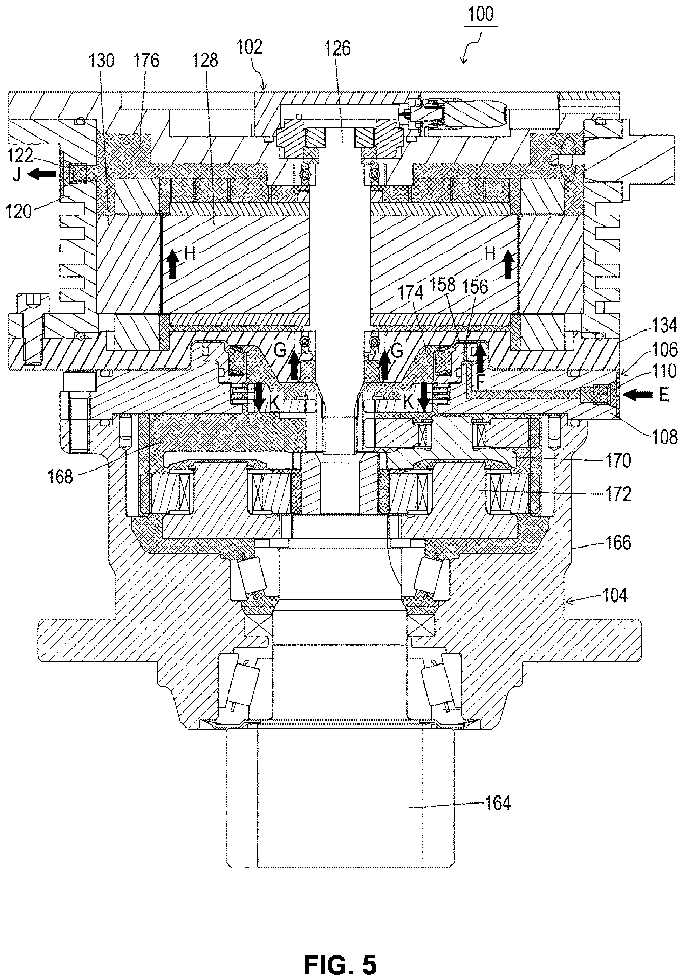

As shown in FIG. 2, the flange 134 on the electric motor 102 side is provided with a recess that supports the bearing of the shaft 126. In the example illustrated in FIG. 2, the recess is defined by an end surface of the flange 134 on the shaft 126 side and a supporting projection located below that end surface, which supports the lower portion of the bearing. This supporting projection is formed so as to maintain a predetermined gap from the shaft 126. The gap between the supporting projection and the shaft 126 serves as a passage for the hydraulic fluid, which will be denoted by reference symbol G in FIG. 5 and described later.

The flow path of the hydraulic fluid also includes a boundary portion with an internal space 174 of the brake mechanism 106 located below the above-mentioned gap. In addition, the flow path of the hydraulic fluid includes an interior of the bearing located above the gap. Furthermore, the shaft 126 extends further into the brake casing 108 of the brake mechanism 106. When electric current is applied to the electric motor 102, the electric motor 102 causes the shaft 126 to rotate together with the rotor 128 due to the interaction between the rotor 128 and the stator 130.

The brake mechanism 106 includes a disc support portion 136, two brake discs 138a and 138b, a brake piston 140, and a brake spring 142, as shown in FIG. 3. In the brake mechanism 106, these components are arranged within the brake casing 108. The disc support portion 136 is a disc-shaped member fitted to the shaft 126of the electric motor 102. In addition, an internal space 174 is defined on an inner side (the shaft 126 side) of the brake piston 140 by the brake piston 140, the shaft 126, and the flange 134. The internal space 174 will be described later in the explanation of the hydraulic fluid flow path (see FIG. 5).

The brake discs 138a and 138b are annular members fitted to the disc support portion 136. A retaining member 144a is disposed on the brake piston 140 side of the brake disc 138a. A retaining member 144b is disposed between the brake discs 138a and 138b. The retaining member 144a and 144b are fixed by fitting to grooves provided in the brake casing 108.

Friction plates 139a and 139b are adhered to the top and bottom ends of the brake discs 138a and 138b, respectively. Thus, the retaining member 144a is in contact with the friction plate 139a on the upper side of the brake disc 138a and the brake piston 140, as shown in FIG. 3. The retaining member 144b is in contact with the friction plate 139a on the lower side of the brake disc 138a and further with the friction plate 139b on the upper side of the brake disc 138b.

As shown in FIG. 3, the brake spring 142 is disposed between the flange 134 of the electric motor 102 and the brake piston 140, while being accommodated in a receptacle 146 of the brake piston 140. The brake piston 140 is biased toward the brake discs 138a and 138b by a spring force of the brake spring 142, as indicated by arrow B in FIG. 3.

The retaining member 144a is pressed against the brake piston 140. As a result, the brake discs 138a and 138b, which include friction plates 139a and 139b, operate integrally with the retaining members 144a and 144b. At this time, all of the brake disks 138a and 138b and the retaining members 144a and 144b elastically deform and come into frictional contact with each other. Then, when the friction plate 139b of the brake disc 138b comes into contact with an opposite surface 150 of the brake casing 108, the brake discs 138a and 138b are rendered non-rotatable by the frictional force generated between the brake discs 138 and 138b and brake casing 108. In this manner, the brake mechanism 106 enters a braking state in which the disc support portion 136 is rendered non-rotatable, thereby making it possible to prevent rotation of the shaft 126 when the electric motor 102 is not in operation.

The brake mechanism 106 also includes a brake chamber 152 defined by the brake casing 108 and the brake piston 140, as shown in FIG. 3. The brake chamber 152 is located at an end of the brake release hydraulic passage 154, which is continuous with the brake release port 110 (see FIG. 2) and serves as a space where the hydraulic pressure of the hydraulic fluid acts on the brake piston 140. Here, in the example shown in FIG. 2, the brake release pressure oil passage 154 is provided within the brake casing 108 so as to extend from the brake release port 110 toward the brake discs 138a and 138b, along a path between the electric motor 102 and the speed reducer 104. Furthermore, the brake release pressure oil passage 154 is formed on a position outward of the brake discs 138a and 138b and extends toward the brake chamber 152, which is located on an upper side.

In other words, hydraulic fluid is supplied to the brake chamber 152 from the brake release port 110 via the brake release pressure oil passage 154. The hydraulic fluid supplied to the brake chamber 152 generates a force by hydraulic pressure, as indicated by arrow C, which acts against an urging force of the brake spring 142, indicated by arrow B. Then, this hydraulic force moves the brake piston 140 toward the electric motor 102 side. As a result, the brake piston 140 is caused to separate from the brake discs 138a and 138b. In the brake mechanism 106, when the brake piston 140 is moved away from the brake discs 138a and 138b by the hydraulic force of the hydraulic fluid, the disc support portion 136, which is fitted to the shaft 126, enters a brake release state in which it becomes rotatable.

When the brake is released in this manner, the brake piston 140 moves toward the electric motor 102 side. At this time, a gap is formed between the friction plates 139a and 139b of the brake discs 138a and 138b and the retaining members 144a and 144b. This gap functions as a supply passage 118 (see FIG. 1) for supplying hydraulic fluid to the speed reducer 104. The flow path leading up to the supply passage 118, before the hydraulic fluid is supplied thereto, will be described below.

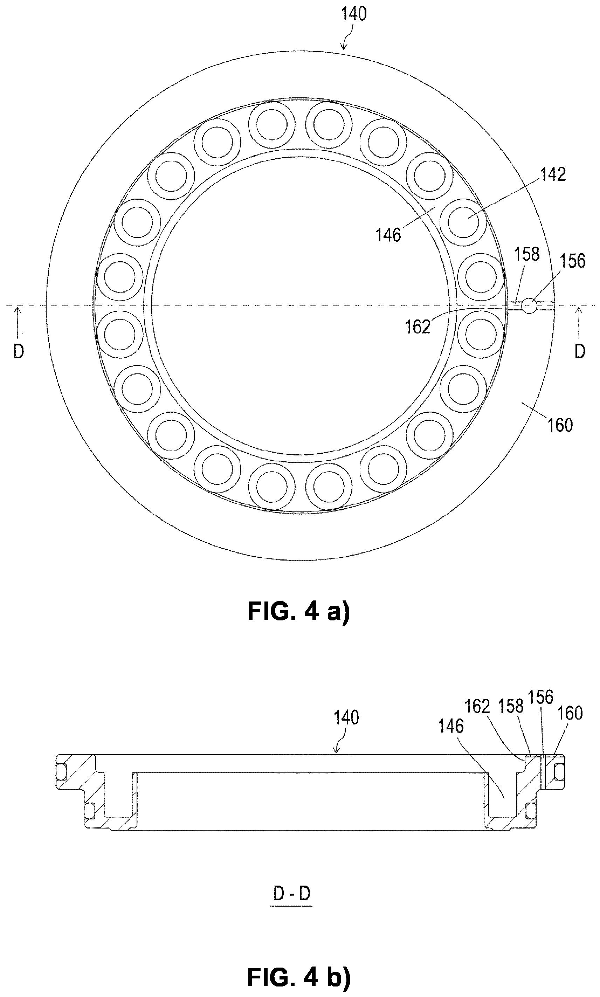

FIG. 4 is a view showing the brake piston 140 of the rotary drive system 100 shown in FIG. 3. FIG. 4 (a) is a top view of the brake piston 140, showing a state in which the brake spring 142 is accommodated in the receptacle 146 of the brake piston 140. FIG. 4 (b) is a D-D cross-sectional view of the brake piston 140 shown in FIG. 4 (a).

The brake piston 140 includes a communication hole 156 and a slit 158. As shown in FIG. 3, the communication hole 156 is in communication from the brake chamber 152 side to the electric motor 102 side. In the example shown in FIG. 3, the communication hole 156 is formed in a direction corresponding to a direction from the speed reducer 104 toward the electric motor 102. In addition, a slit 158 is formed in an end surface 160 of the brake piston 140 on the electric motor 102 side. As shown in FIG. 4(a), the slit 158 is in communication with the communication hole 156 and extends to an edge 162 of the receptacle 146 side of the end surface 160.

As shown in FIG. 2, the speed reducer 104 includes an output shaft 164, and a first-stage planetary gear mechanism 170 and a second-stage planetary gear mechanism 172, which are arranged in an internal space 168 of a speed reducer casing 166. The speed reducer 104 decelerates the rotation (output) of the shaft 126 of the electric motor 102 by means of the first-state planetary gear mechanism 170 and the second-stage planetary gear mechanism 172 and outputs the decelerated rotation from the output shaft 164.

FIG. 5 is a diagram showing the flow of hydraulic oil supplied to the rotary drive system 100 of FIG. 2. In the diagram, hydraulic oil is indicated by hatching and the flow of hydraulic oil is indicated by arrows.

In the rotary drive system 100, when the hydraulic fluid is supplied from the external hydraulic source 112 to the brake release port 110 during operation of the electric motor 102 (see arrow E), the hydraulic fluid is supplied to the brake release pressure oil passage 154, as shown in FIG. 3. Furthermore, the hydraulic fluid is supplied to the brake chamber 152 through the brake release pressure oil passage 154. When the hydraulic fluid is supplied to the brake chamber 152, as described above, a force due to hydraulic pressure is generated, as indicated by arrow C in FIG. 3, against the biasing force of the brake spring 142 indicated by arrow B, whereby the brake piston 140 moves toward the electric motor 102 side and the brake is released.

The hydraulic fluid supplied to the brake chamber 152 flows through the communication hole 156 of the brake piston 140, as shown in FIG. 3, and reaches the end surface 160 on the electric motor 102 side (see arrow F in FIG. 5). Furthermore, the hydraulic fluid reaches an internal space 174 of the brake mechanism 106, as shown in FIG. 5, through the slit 158 that communicates from the communication hole 156 to the edge 162 of the end surface 160 of the brake piston 140 (see FIG. 4(a)).

When the hydraulic fluid is supplied to the brake chamber 152, the brake piston 140 moves toward the electric motor 102, and the end surface 160 of the brake piston 140 may be blocked by the flange 134 of the electric motor 102. However, in the present embodiment, even in such a case, since the slit 158 is formed in the end surface 160, the hydraulic fluid is reliably supplied to the internal space 174 of the brake mechanism 106.

When the brake piston 140 moves toward the electric motor 102 side and the brake is released, the hydraulic fluid that is supplied to the brake chamber 152 passes through the supply passage 118 (see FIGS. 1 and 3), which is formed by gaps between the inner diameter portions 147a and 147b of the retaining members 144a and 144b as shown in FIG. 3 and the fitting portions between the disc support portion 136 and the brake discs 138a and 138b and reaches the internal space 168 of the speed reducer casing 166 (see arrow K in FIG. 5). In this way, the hydraulic fluid is supplied into the speed reducer 104 as lubricating oil. Once the internal space 168 (on the speed reducer 104 side) is filled with hydraulic fluid, the hydraulic fluid then reaches the electric motor 102 side above the internal space 174 of the brake mechanism 106 (see FIG. 5).

That is, the hydraulic fluid that is supplied to the internal space 174 of the brake mechanism 106 passes through the gap between the flange 134 of the electric motor 102 and the shaft 126 (arrow G). The hydraulic fluid further passes through the gap between the rotor 128 and the stator 130 (see arrow H) and reaches the internal space 176 of the electric motor 102. Here, in the example shown in FIG. 2, the flow path indicated by arrow G, which passes through the gap between the flange 134 and the shaft 126, is as follows. That is, as described above, the hydraulic fluid flows from the internal space 174, passes between the end surface of the flange 134 and the shaft 126, and further passes through the interior of the bearing to finally reach a lower surface side of the electric motor 102. Furthermore, a gap is provided between a lower surface side of the electric motor 102 and the flange 134, extending outward from the bearing (toward the stator 130 side). The hydraulic fluid passes through the gap between the lower surface side of the electric motor 102 and the flange 134 and reaches the lowermost portion of the gap between the rotor 128 and the stator 130. As shown in FIG. 2, a spacer is sandwiched between the rotor 128 and the flange 134 and is in close contact with both rotor 128 and the flange 134 on its upper and lower surfaces. Accordingly, the hydraulic fluid does not flow outward through the gap or the spacer but instead enters the gap between the rotor 128 and the stator 130.

Subsequently, the hydraulic oil reaching the internal space 176 of the motor 102 is discharged to the drain pan 124 (see FIG. 1) through the discharge port 122 provided in the housing 120 of the motor 102 (arrow J). Thus, the hydraulic oil passing through the motor 102 can cool the electric motor 102.

In the example shown in FIG. 5, the flow path indicated by arrow J is as follows. A gap is formed between an upper surface side of the electric motor 102 and an upper part of the housing 120 of the electric motor 102. The hydraulic fluid that has passed through the path between the rotor 128 and the stator 130, as indicated by arrow H, exits from an upper end of that path and reaches the gap between the upper surface side of the electric motor 102 and the housing 120 of the electric motor 102. Furthermore, as shown in FIG. 5, the hydraulic fluid passes through this gap and reaches the discharge port 122 provided on the outside of the housing 120 of the electric motor 102.

Here, it should be noted that the above description illustrates an example in which, after the internal space 168 on the speed reducer 104 side is filled with hydraulic fluid, the hydraulic fluid subsequently reaches the electric motor 102 side above the internal space 174 (see FIG. 5). However, the present invention is not limited to this configuration, and other examples may also be employed. Specifically, the supply passage 118 may be formed narrower than the hydraulic fluid passage between the flange 134 and the shaft 126, as indicated by arrow G. In other words, the gap between the inner diameter portions 147a and 147b and the fitting portions between the disc support portion 136 and the brake disks 138a and 138b may be made narrower than the passage between the flange 134 and the shaft 126. With this configuration, a portion of the hydraulic fluid flowing into the internal space 174 of the brake mechanism enters the supply passage 118, while another portion flows in parallel toward the direction of arrow G. In this way, it is also possible for the hydraulic fluid to flow into the electric motor 102 side before the internal space 168 on the speed reducer 104 side becomes filled.

Therefore, in the rotary drive system 100, the hydraulic oil for releasing the brake of the brake mechanism 106 and the lubricating oil for the speed reducer 104 can be supplied from one external hydraulic source 112, and the electric motor 102 can be cooled by the hydraulic oil.

In addition, the hydraulic fluid is supplied to the brake chamber 152 each time the brake is released and is discharged from the discharge port 122 provided in the housing 120 of the electric motor 102. Therefore, in the rotary drive system 100, since the hydraulic fluid is not used as internally recirculating lubricating oil, there is no need to replace the lubricating oil (for internal circulation), and the cleanliness of the lubricating oil can be maintained.

In the rotary drive system 100, a slit 158 is formed in the end surface 160 of the brake piston 140 in consideration of the case where the end surface 160 of the brake piston 140 is blocked by the flange 134 of the electric motor 102 when the brake is released, but this is not limited thereto. As an example, instead of the slit 158, the hydraulic oil may be supplied to the internal space 174 of the brake mechanism 106 by appropriately providing a step in the end surface 160 of the brake piston 140 to form a gap.

The above described preferred embodiments of the present invention have been described with reference to the attached drawings, but it is needless to say that the present invention is not limited to such examples. It is obvious that a person skilled in the art can come up with various modification or modification examples within the scope of the claims, and it is naturally understood that these examples also belong to the technical scope of the present invention.

### INDUSTRIAL APPLICABILITY

The present invention can be applied as a rotary drive system including a motor and a speed reducer.

### LIST OF REFERENCE NUMERALS

100... Rotary drive system, 102... Electric motor, 104... Speed reducer, 106... Brake mechanism, 108... Brake casing, 110... Brake release port, 112... Hydraulic source, 114... Strainer, 116... Working fluid tank, 118... Supply passage, 120... Housing of the electric motor, 122... Discharge port, 124... Drain pan, 126... Shaft, 128... Rotor, 130... Stator, 132... Bearing, 134... Flange of the electric motor, 136... Disc support portion, 138a, 138b... Brake discs, 139a, 139b... Friction plates of brake discs, 140... Brake piston, 142... Brake spring, 144a, 144b... Retaining members, 146... Receptacle of the brake piston, 147a, 147b... Inner diameter portion of the retaining member, 150... Opposite surface of the brake casing, 152... Brake chamber, 154... Brake release pressure oil passage, 156... Communication hole, 158... Slit, 160... Electric motor side end surface of the brake piston, 162... Edge of the end surface of the brake piston, 164... Output shaft, 166... Speed reducer casing, 168... Internal space of the speed reducer casing, 170... First-stage planetary gear mechanism, 172... Second-stage planetary gear mechanism, 174... Internal space of the brake mechanism, 176... Internal space of the electric motor,

## Claims

1. A rotary drive system, comprising:
an electric motor;
a speed reducer for reducing a rotational speed of the electric motor; and
a brake mechanism, which is disposed between the electric motor and the speed reducer, for stopping rotation of the speed reducer, **characterized in that**
the brake mechanism comprises:
a brake casing;
a brake disc fixed to a shaft of the electric motor;
a brake piston that comes into frictional contact with the brake disc;
a brake spring that biases the brake piston toward the brake disc;
a brake chamber defined by the brake casing and the brake piston;
a brake release port provided in the brake casing for supplying hydraulic fluid, which moves the brake piston toward an electric motor side against a biasing force of the brake spring to separate the brake piston from the brake disc, from an external hydraulic source to the brake chamber;
a communication hole formed in the brake piston, communicating between the brake chamber side and the electric motor side;
a discharge port provided in a housing of the electric motor for discharging the hydraulic fluid that passes from the brake chamber to an interior of the electric motor via the communication hole of the brake piston; and
a supply passage formed between the brake piston and the brake disc when the brake piston is moved toward the electric motor side for supplying the hydraulic fluid, which is supplied to the brake chamber, to the speed reducer.

2. The rotary drive system according to Claim 1,
wherein a slit is formed in an end surface of the brake piston on an electric motor side, and
the slit is in communication with the communication hole and extends to an edge of the end surface of the brake piston on the electric motor side.

3. The rotary drive system according to Claim 1 or 2,
wherein the electric motor comprises:
a stator fixed to the housing; and
a rotor that rotates together with the shaft when electric current is applied,
wherein hydraulic fluid passes through a gap between the rotor and the stator, traverses the interior of the electric motor, and is discharged through the discharge port.

4. The rotary drive system according to claim 3,
wherein an internal space is defined by the brake piston, the shaft, and the flange of the electric motor on an inner side of the brake piston of the brake mechanism, and
a flow path for hydraulic fluid is formed between the shaft and an end surface of the flange on the shaft side and is extending to the gap between the rotor and the stator.

5. The rotary drive system according to claim 3,
wherein a spacer is provided between one surface side of the electric motor and the flange of the electric motor,
a gap is formed between one surface side of the electric motor and the flange of the electric motor by the spacer, and
the hydraulic fluid passes through the gap between one surface side of the electric motor and the flange of the electric motor and reaches the gap between the rotor and the stator.

6. The rotary drive system according to claim 3,
wherein a gap is provided between the other surface side of the electric motor, which is an opposite side of one surface side of the electric motor and the housing of the electric motor, and
the hydraulic fluid passed through the gap between the rotor and the stator passes between the other surface and the housing of the electric motor.
